# EUROPEAN PATENT APPLICATION

(11) **EP 2 165 883 A1**
(43) Date of publication of application: **24.03.2010**
(21) Application number: 09170542.6
(22) Date of filing: 17.09.2009
(51) Int. Cl.: B60Q 1/52, B60R 21/34

(54) **Device for the avoidance of traffic accidents**

(30) Priority: 17.09.2008 NL 2001991
(71) Applicant: TRM Curé Beheer BV, 3328 KN Dordrecht (NL)
(72) Inventor: Ton, Frederik, 3312 JN, Dordrecht (NL)
(74) Representative: Ketelaars, Maarten F.J.M.

(57) **Abstract**

Device for the avoidance of accidents between a vehicle (10) and a road-user (14). The device has a sensor combination (2) comprising a pressure-sensitive sensor (5) and a proximity sensor (6) and a processing unit (3) connected to the sensor combination (2). The proximity sensor (6) is a sensor based upon a biomass-discriminative detection technology, such as a frequency modulated continuous wave radar technology (FMCW) or a capacitive technology.

## Description

### Field of the invention

The present invention relates to a device for the avoidance of accidents between a vehicle and a road-user, wherein the device comprises a sensor combination having a pressure sensitive sensor and a proximity sensor, and a processing unit connected to the sensor combination.

### Prior art

Such a device is known from the Dutch patent application NL1024632, wherein a device is disclosed that comprises a pressure sensor which is attached to the side of a vehicle such as a lorry. A road-user next to the vehicle can operate the pressure sensor, after which a warning is given in the driver's cabin of the vehicle. The pressure sensor also provides a signal in the event of a collision. Further disclosed in the application is that the device can comprise an additional sensor based upon detection by means of infrared radiation or electromagnetic waves. This additional sensor detects objects in close proximity to the sensor, including static objects on or near to the road being used by the road-user.

In addition, warning devices are known in the prior art that warn the driver of other road-users who are out of view of all mirrors, based upon ultrasonic detection and detection by means of the image processing of camera images.

### Summary of the invention

The present invention attempts to provide an improved device, which provides the driver with a more reliable detection of other road-users, such as cyclists, moped riders, motor-cyclists and pedestrians who are in close proximity to the vehicle.

According to the present invention, a device is provided, as defined in the preamble, wherein the proximity sensor is a sensor based upon a biomass-discriminative detection technology. Such a proximity sensor is suitable for detecting a biomass, whilst also distinguishing non-biological objects that do not result in a detection signal. This makes the present device more suitable than existing proximity sensors, wherein no distinction can be made between biological and non-biological objects.

In one embodiment, the biomass-discriminative technology comprises a radar sensor based upon a frequency modulated continuous-wave radar technology (FMCW).

In one embodiment, the radar sensor operates within the S-band, C-band or X-band range, i.e. between 2-4 GHz, 3-8 GHz or 7-12.5 GHz. These frequency bands also enable the reliable detection of objects with smaller dimensions (for example arms, legs, upper body).

In a further embodiment, the biomass-discriminative technology comprises a capacitive sensing technology, and the device is provided with an assembly of a transmitter electrode and a sensing electrode, and a processing unit linked to the assembly of the transmitter electrode and sensing electrode for determining a dielectric parameter (epsilon). As in FMCW, this is also a radar-like principle that operates with the use of electrodes, that is the sensors. As in FMCW, the principle is based upon a signal transmitted by means of a signal transmitting electrode (the Transmitter Electrode) and a received signal by means of a receiving electrode (the Sensing Electrode). The strength of the signal transmitted is very low and is influenced by the electrical conductance of the human body, 70% of which is composed of (saline) water. By sensing the specific epsilon (ε) of the human or animal, the human body - the biomass - can be distinguished, differentiated from other non-living matter.

The device further comprises a warning device which is linked to and controlled by the processing unit, and the warning device is designed for transmitting a signal of a first kind, depending on a signal originating from the pressure-sensitive sensor. If a road-user comes into contact with the pressure-sensitive sensor (in the event of an actual collision) or operates (touches) the sensor to signal that there is a possibility of a hazardous situation occurring, the driver of the vehicle is warned immediately and clearly by the signal of the first kind.

In a further embodiment, the warning device is designed to transmit a second type of signal depending on a signal originating from the proximity sensor. This second type of signal can have a form of a more friendly pre-alert signal, to which the driver can adequately respond.

In a further embodiment, the sensor combination comprises an elongated strip with an integrated pressure sensor and one or more integrated antennas associated with the radar sensor. This enables easy mounting on the vehicle at different positions that border on different areas around the vehicle that can possibly present dangerous situations for the road-user, such as the side, the front and/or the rear of the vehicle.

In one embodiment, the radar sensor is linked to an array of individual antennas. These can be individually controlled, or controlled jointly as a group. Due to the frequencies used, the different antennas can have relatively small dimensions.

In another embodiment, an operational wavelength of the radar sensor can be adjusted. For example, this can be adjusted so that it is dependent on the size of the detectable objects anticipated, for example the cross-sections of human body parts or the cross-section of a human body.

In one embodiment, the radar sensor is designed to detect objects within a predefined speed range. The speed of a detected object can be determined, for example, by measuring the Doppler-shift of the reflected radar signal. Using signal processing techniques, this enables only those objects that are detected within a specific speed range to be actually signalled to the processing unit. In this manner, the radar sensor can also be designed to detect the distance from an object, and for detecting only those objects that are located within a specific distance range. Also, the second type of warning signal can be made to be dependent on the detected distance between the antenna and the object in question.

### BRIEF DESCRIPTION OF THE FIGURES

The present invention will now be described in more detail based upon a number of exemplary embodiments with reference to the following drawings, wherein:
Fig. 1 shows a sketch of a situation in which the present invention can be applied;
Fig. 2 shows a block diagram of an embodiment of the device for the avoidance of accidents between a vehicle and another road-user.
Fig. 3 shows a partial cross-section of a sensor combination in the form of a strip according to one embodiment of the present invention.

### Description of the exemplary embodiments

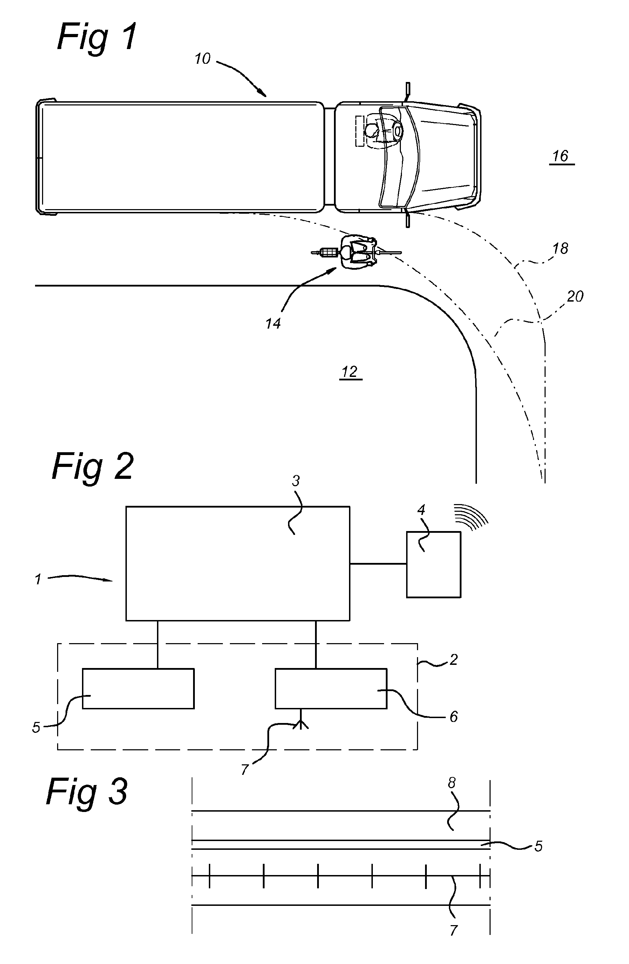

Fig. 1 shows a schematic representation of a top view of a potentially hazardous situation, wherein a vehicle 10 and a road-user (cyclist) 14 are involved. If the vehicle wishes to turn to the right and the cyclist 14 is located in the vicinity of the vehicle 10 as shown, there is a risk of collision because vehicle 10 is on the road 16 and will pass very close to the pavement 12. The possible path of the vehicle 10 is indicated by dotted line 18, and that of the rear wheels of the vehicle 10 with dotted line 20. Also, in other situations, a collision may occur or there may also be a risk of this occurring in situations wherein road-user 14 can be overseen by the driver of the vehicle 10, such as when making a right or left turn, but also as the vehicle drives forwards or backwards.

To avoid such a collision, and to provide the driver of the vehicle 10 with more awareness of the situation around the vehicle 10, the vehicle is equipped with a device 1 for the avoidance of accidents between the vehicle 10 and the road-user 14.

A block diagram of the device 1 is shown in Fig. 2. This device comprises a processing device 3 for receiving and processing signals received from a sensor combination 2. The sensor combination 2 comprises a pressure-sensitive sensor 5 and a proximity sensor 6. The processing device 3 is linked to a warning device 4, that is suitable, for example, for providing acoustic and/or visual warning signals.

The pressure-sensitive sensor 5 can be an ON/OFF switch, or for example a pressure-dependent sensor that transmits a signal that is related to the force exerted on the pressure-sensitive sensor 5. This signal is processed by the processing device 3, and in response thereto, the processing device 3 controls the warning device 4 to transmit a first type of warning signal. The pressure-sensitive sensor 5 is fitted to the vehicle 10 in such a manner, that this can be operated by the road-user 14 in the event of an actual collision. The pressure-sensitive sensor 5 is therefore located in a position on the vehicle 10 where it can be controlled by the road-user 14 when said road-user suspects that a collision will follow. Both situations require a direct response from the driver of the vehicle 10, and the first type of warning signal must therefore be a clearly audible signal, such as a loud acoustic warning.

In one of the embodiments of the present application, the proximity sensor 6 is a radar based proximity sensor, being a radar sensor based upon frequency modulated continuous wave (Frequency Modulated Continuous Wave, FMCW) technology. Such a radar sensor 6 is capable of detecting a biomass (such as the road-user 14), whereas a non-biomass does not result in a detection signal (for example poles for traffic signs, traffic-lights, bus shelters, poles of street lanterns etc.). The radar sensor 6 transmits electromagnetic waves via antenna 7, which are then reflected by objects such as road-user 14 and received again by the same antenna 7. The control and signal processing in radar sensor 6 ensures that the one antenna 7 can be applied successively in real-time as both a transmitter and receiving antenna. The advantage hereby is that such radiation is not affected by exterior conditions such as darkness, rainfall, wind, etc. as is often the case with other detection techniques such as ultrasonic sensors, light sensors and the image analysis of camera images.

The radar sensor 6 operates within the S-band (2-4 GHz), C-band (3-8 GHz) or X-band (7-12.5GHz) range, with wavelengths of 7.5-15 cm, 3.75-10 cm en 2.5-4 cm respectively. The wavelength determines the resolution of objects that can be detected by the electromagnetic radiation. Within the specified ranges, this may vary from between relevant body parts (arms, legs) and the entire body of the road-user 14. In some cases, these FMCW waves can also be used to see through certain matter. Most reflection from an object 14 with a biomass is achieved by echoes related to the moisture in a body, and the dielectric properties of a body.

In a further embodiment, a biomass-discriminative detection technology is based upon a capacitive measuring technology. To achieve this, the device is provided with an assembly 7 of a transmitter electrode and a sensing electrode, and a processing unit 6 (collectively constituting the proximity sensor 6) connected to the assembly of the transmitter electrode and sensing electrode for determining a dielectric parameter (epsilon). As in FMCW, this is also a radar-like principle that operates with the use of electrodes as the sensors which are mounted to a vehicle. As in FMCW, the principle is based upon a signal transmitted by means of a signal transmitting electrode (Transmitter Electrode) and a feedback signal by means of a receiving electrode (the Sensing Electrode). The strength of the signal transmitted is very low and is affected by the electrical conductance of the human body, 70% of which is composed of (salt) water. By processing the signals transmitted and received in the processing device 6 and by sensing the specific epsilon (ε) of the human or animal, the human body - the biomass - can be distinguished and differentiated from other non-living matter.

The proximity sensor 6 is provided with an antenna 7, or an antenna array 7 with multiple antennas. Due to the frequency used of the proximity sensor 6, a relatively small number of antennas 7 can be used, for example in the form of dipole antennas, strip antennas, etc. In an antenna array 7 all individual antennas 7 can be connected to the proximity sensor 6, which enables the directional sensitivity of the antenna 7 to be manipulated, for example by the use of phase control. In a further embodiment the proximity sensor 6 is partially or entirely incorporated in or integrated with the processing unit 3. For example, part of the proximity sensor 6 (for generating and processing high-frequency analog signals) can be mounted close to the antenna or antenna array 7, and the (digital) signal processing device in the processing unit 3.

In further embodiments, the proximity sensor 6 is designed to be adjustable depending on certain types of object, for example, by setting the frequency to be used. In this manner, the susceptibility of the proximity sensor 6 can be fine-tuned so that it is most sensitive to biomasses that correspond to (parts of) the human body.

In a further embodiment, the proximity sensor 6 is designed to only transmit a detection signal in the event that the object detected complies with specific characteristic parameters, such as dimension and distance to the antenna 7. In addition to distance, the proximity sensor 6 can also be used to determine the relative speed of a detected object, for example by determining the Doppler-shift in the FMCW signal. By applying signal processing techniques implemented in the proximity sensor 6, it possible to detect only those objects that are located within certain window envelopes of a characteristic quantity (such as dimension, distance, speed).

Accordingly, the proximity sensor 6 can be applied to determine the presence of a road-user 14 in a possibly dangerous position relative to the vehicle 10. This can be signalled to the driver of the vehicle 10 as a kind of alert signal, using a second type of warning signal. This can be a less audibly loud sound, or a visual warning.

The processing device 3 may be designed to control the warning device 4 for it to transmit a second type of warning signal, depending on the signal provided by the proximity sensor 6. In doing so, account can be taken of the distance detected, the number of objects detected, or the speed at which an object is travelling in relation to the vehicle 10.

The sensor combination 2 in one embodiment is integrated into a single (elongated) strip 8 that, for example, can be attached to certain parts of the vehicle 10. The strip 8 can be manufactured from a flexible material, which also provides adequate protection for the sensor combination 2. A partial view of such a strip 8 is shown in Fig. 3. An elongated form of the pressure-sensitive sensor 5 is applied in the strip. In the embodiment shown, a number of antennas 7 (as part of an antenna array 7) is arranged in an elongated area adjacent to the pressure sensor 5.

The strip 8 can be applied to the side of the vehicle 10 (e.g. on a side wall of the vehicle 10, a bicycle trap or the side of the cabin), but also to the front and/or to the rear of the vehicle 10. Such a strip 8 can easily be attached close to all areas and smaller areas around a vehicle 10 where the presence of a road-user 14 may present a potentially dangerous situation (and which is not visible to the driver, for example through the use of mirrors). The length of the strip 8 will depend on where it is to be placed on the vehicle, and can vary from between several centimeters to several metres.

A multiple number of strips 8 can be applied to a vehicle 10. The signals provided by the pressure-sensitive sensor 5 and proximity sensor 6 can be transferred through electrical cables or by wireless means, using techniques for wireless data transfer already known in the prior art.

The processing device 3 can also be designed to ensure the presence and proper functioning of the pressure-sensitive sensor 5 and proximity sensor 6. If a malfunction is detected, the processing device 3 can signal this to the driver of the vehicle 10 by means of the alarm device 4.

## Claims

1. Device for the avoidance of accidents between a vehicle (10) and a road-user (14), wherein the device (1) comprises:
a sensor combination (2) comprising a pressure-sensitive sensor (5) and a proximity sensor (6) and a processing unit (3) linked to the sensor combination (2),
wherein the proximity sensor (6) is a sensor based upon a biomass-discriminative detection technology.

2. Device according to claim 1, wherein said biomass-discriminative technology comprises a radar sensor (6) based upon a frequency modulated continuous-wave radar technology (FMCW).

3. Device according to claim 2, wherein the radar sensor (6) operates within the S-band, C-band or X-band range.

4. Device according to claim 1, wherein said biomass-discriminative technology comprises a capacitive sensing technology, and said device is provided with an assembly (7) of a transmitting electrode and a sensing electrode, and a processing unit (6) connected to the assembly (7) of the transmitting electrode and sensing electrode for determining a dielectric parameter (epsilon).

5. Device according to any of the claims 1-4, wherein the device (1) comprises a further warning device (4) connected to and controlled by the processing device (3), and wherein the warning device (4) is arranged to provide a first type of signal depending on a signal originating from the pressure-sensitive sensor (5).

6. Device according to claim 5, wherein the warning device (4) is arranged for providing a second type of signal depending on a signal originating from the proximity sensor (6).

7. Device according to any of the claims 1-6, wherein said sensor combination (2) comprises an elongated strip with an integrated pressure sensor (5) and one or more integrated antennas (7) associated with the sensor (6).

8. Device according to any of the claims 1-7, wherein the sensor (6) is connected to an array of individual antennas (7).

9. Device according to any of the claims 1-8, wherein the operational wavelength of the sensor (6) is adjustable.

10. Device according to any of the claims 1-9, wherein the sensor (6) is designed to detect objects within a predefined speed range.

11. Device according to any of the claims 1-10, wherein the sensor (6) is designed to detect a distance to an object.
